Europäisches Patentamt

European Patent Office

Office européen des brevets

(19)

(11) Veröffentlichungsnummer: **0 369 040**

**A1**

## (12) EUROPÄISCHE PATENTANMELDUNG

(21) Anmeldenummer: 88118953.4

(22) Anmeldetag: 14.11.88

(51) Int. Cl.5: **A63B 29/02, F16B 13/14**

(43) Veröffentlichungstag der Anmeldung:
23.05.90 Patentblatt 90/21

(84) Benannte Vertragsstaaten:
AT DE

(71) Anmelder: DEUTSCHER ALPENVEREIN E.V.
Praterinsel 5
D-8000 München 22(DE)

(72) Erfinder: Schubert, Pit
Jägerweg 14
D-8152 Feldkirchen(DE)
Erfinder: Mägdefrau, Heimut
Stefanienstrasse 6
D-8024 Deisenhofen(DE)

(74) Vertreter: Patentanwälte Beetz sen. - Beetz
jun. Timpe - Siegfried - Schmitt-Fumian-
Mayr
Steinsdorfstrasse 10
D-8000 München 22(DE)

(54) **Klebehaken, insbesondere zur Anbringung in Felsgestein oder dergleichen.**

(57) Die vorliegende Erfindung betrifft einen Klebehaken mit einem Kopf (2) und einem Schaft (1), wobei
der Schaft (1) einen Mantelflächenbereich (3) mit
profilierter Oberflächenstruktur aufweist. Der erfindungsgemäße Klebehaken zeichnet sich dadurch
aus, daß der Schaft (1) mit einer Länge L an dem
Kopfende in einem Bereich mit einer axialen Länge
G eine glatte, von Oberflächenprofile freie Oberfläche aufweist, mit ein Drittel $\frac{L}{3} \leq G \leq \frac{3L}{4}$ .

Fig.2

EP 0 369 040 A1

## Klebehaken, insbesondere zur Anbringung in Felsgestein oder dergleichen

Die vorliegende Erfindung betrifft einen Klebehaken, insbesondere zur Anbringung in Felsgestein oder dgl., nach dem Oberbegriff des Patentanspruchs 1. Stand-, Abseil- und Sicherungshaken werden von Bergsteigern und Kletterern seit sehr langer Zeit verwendet. Heute werden überwiegend Bohrhaken gesetzt. Diese werden in das Berggestein geschlagen. Bei den meisten derzeit gängigen Bohrhaken verbleibt die Bohrkrone im Fels. Somit steht die Mantelfläche der Bohrkrone in direktem Kontakt mit dem Felsgestein. Führt das Felsgestein z.B. durch feine Haarrisse Feuchtigkeit unter der Felsoberfläche, so ist die Bohrkrone der Rostbildung ungeschützt ausgesetzt, was die Festigkeit stark beeinträchtigen kann. Auch kann von außen Feuchtigkeit in das Bohrloch eindringen und somit dem Haken zusetzen.

Neuere Entwicklungen gehen dahin, Bohrhaken durch Klebehaken zu ersetzen. Klebehaken werden in vorgebohrte Löcher eingesetzt, in die eine einen Zwei-Komponenten-Kleber enthaltende Glaspatrone zuvor eingeführt worden ist. Die Glaspatrone wird durch das Einführen des Klebehakens zertrümmert, so daß sich die zwei Komponenten des Klebers vermischen können. Während des Vermischens wird der Klebehaken unter Drehung um seine Achse in das Bohrloch eingetrieben. Das Bohrloch hat in der Regel einen um etwa 2 mm größeren Durchmesser als der Schaft des Klebehakens, der in der Regel über seine gesamte Länge mit einem Gewinde versehen ist. Durch das Eindrehen des Gewindehakens in das Bohrloch wird der Zwei-Komponenten-Kleber z.T. durch die Gewindegänge des Hakenschaftes in Richtung auf die Eingangsöffnung des Bohrloches verdrängt. Der ausgehärtete Zwei-Komponenten-Kleber umhüllt somit den gesamten Bohrhakenschaft und schützt ihn auf diese Weise gegen Feuchtigkeit. Ein Rosten des Hakens auf der Höhe des Hakenschaftes wird auf diese Weise effektiv verhindert.

Bei einem bekannt gewordenen Klebehaken ist die gesamte Schaftmantelfläche mit einem Gewinde versehen, das somit bis zum Hakenkopf reicht. Da das Gewinde eine Aneinanderreihung von Kerben darstellt, wirkt jede Kerbe bei einer Radialbelastung des Hakens quasi als Sollbruchstelle, so daß ein Abscheren des Schaftes in der Nähe des Kopfendes des Klebehakens stets in einer solchen Gewindekerbe ihren Ursprung nimmt. Somit muß die Schaftstärke größer gewählt werden, um eine bestimmte Radialbelastung auszuhalten, als dies der Fall wäre, wenn die Mantelfläche glatt wäre.

Eine glatte Mantelfläche kann jedoch die erforderliche Klebehaftung bei axialer Belastung des Klebehakens nicht gewährleisten.

Herkömmliche Klebehaken, die eine ausreichend große Festigkeit bei Axialbelastung als auch bei Radialbelastung aufweisen, erfordern somit Bohrlöcher mit relativ großem Durchmesser. So muß z.B. bei herkömmlichen Klebehaken ein Bohrloch für einen Klebehaken, der 3500 kp Belastung in Axialsowie in Radialrichtung aushalten soll, einen Durchmesser von mindestens 18 mm haben. Um ein solches Bohrloch in Felsgestein, z.B. Granit, zu schlagen, bedarf es größter Kraftanstrengungen, da dies in der Regel von Hand erfolgen muß. Einem Bergsteiger fordert das Setzen eines solchen Klebehakens regelmäßig eine halbe Stunde schwerste Handarbeit ab. Elektrische, akkubetriebene Bohrmaschinen haben derzeit noch keine ausreichende Leistungskapazität, die ihren Einsatz am Berg bei solchen Bohrlochdimensionen rentabel werden läßt.

Der vorliegenden Erfindung liegt die Aufgabe zugrunde, einen Klebehaken der eingangs geschilderten Art so zu verbessern, daß dessen Belastbarkeit in Axial- und Radialrichtung verbessert wird, ohne daß der Schaftdurchmesser vergrößert werden muß.

Diese Aufgabe wird anspruchsgemäß gelöst.

In den Unteransprüchen sind Merkmale bevorzugter Ausführungsformen des erfindungsgemäßen Klebehakens gekennzeichnet.

Der erfindungsgemäße Klebehaken hat also in dem auf dem Kopf folgenden Bereich des Schaftes eine glatte Oberfläche, in der keine Vertiefungen, Kerben oder Gewinde eingeschnitten sind. Somit fehlen in diesem Bereich auch bevorzugte Bereiche, von denen ein Bruch des Hakens sich bei Radialbelastung ausbreiten könnte. Dies hat zur Folge, daß die radiale Belastbarkeit des erfindungsgemäßen Klebehakens auch bedeutend größer ist als die eines Hakens, dessen Schaftdicke abzüglich des stellenweisen Durchmesserverlustes aufgrund von Einkerbungen oder dgl. gleich der Dicke des erfindungsgemäßen Klebehakens ist. Daher kann der erfindungsgemäße Klebehaken bei gleicher axialer und radialer Belastbarkeit einen wesentlich kleineren Schaftdurchmesser aufweisen als herkömmliche Klebehaken. So wurde durch empirische Belastungsversuche belegt, daß ein nach der Erfindung ausgestalteter Klebehaken mit einer Schaftdicke von 12 mm axial und radial mit 3500 kp belastbar ist. Um ein vergleichbares Ergebnis mit einem herkömmlichen Klebehaken zu erzielen, muß dieser eine Schaftdicke von 16 mm aufweisen. Nachdem die jeweiligen Bohrungen in das Felsgestein etwa 2 mm größer im Durchmesser als der Schaftdurchmesser sein sollen, bedeutet dieses, daß bei gleicher Belastbarkeit das für den Einsatz eines erfindungsgemäßen Klebehakens erforderliche Bohrloch einen um 4 mm geringeren Durchmesser zu haben braucht. Dies bedeutet eine erhebliche Verminderung des erforderlichen Kraftaufwandes beim Schlagen eines solchen Bohrloches von Hand. Ferner wird durch die geringere aufzubringende Energie auch der Einsatz von akkugespeisten Elektrobohrgeräten rentabler, da mit einer Akkuaufladung eine größere Anzahl von Bohrlöchern gesetzt werden kann.

Im folgenden wird die Erfindung anhand der Beschreibung bevorzugter Ausführungsformen mit bezug auf die Zeichnung näher erläutert. Darin zeigen:

Fig. 1 eine erste Ausführungsform des erfindungsgemäßen Klebehakens;

Fig. 2 eine zweite Ausführungsform mit einem teilweise mit Vertiefungen versehenen Schaft;

Fig. 3 eine weitere Ausführungsform mit geschmiedeten Rippen;

Fig. 4 eine vierte Ausführungsform eines Klebehakens mit rechteckigem Schaftquerschnitt, und

Fig. 5 eine weitere Ausführungsform eines Klebehakens mit einer plattenförmiger Karabineröse.

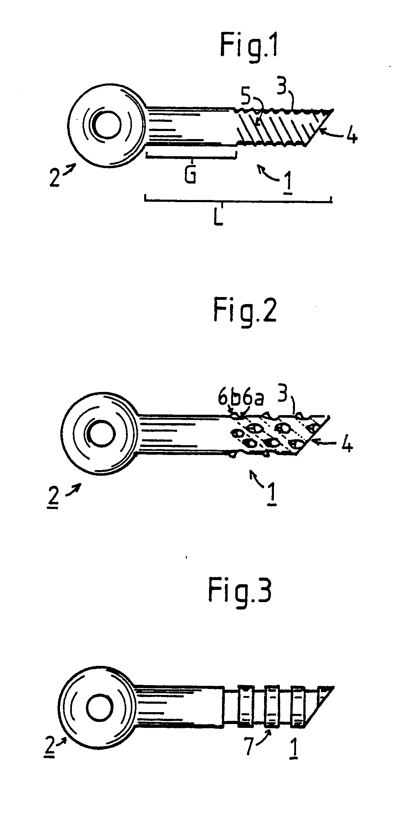

Der in Fig. 1 gezeigte Klebehaken weist einen Schaft 1 der Länge L auf. An dem linken Ende des Schaftes schließt sich ein Kopf 2 an, der hier als Öse ausgeführt ist zur Aufnahme eines (nicht gezeigten) Rings. Der Schaft 1 ist in diesem Ausführungsbeispiel im wesentlichen zylinderförmig und weist einen zusammenhängenden profilierten Bereich 3 auf, der ausgehend von der Hakenspitze bis zu einer bestimmten Stelle, in axialer Richtung des Schaftes auf den Hakenkopf zu gesehen, weist. Der verbleibende Teil der Mantelfläche des Schaftes hat eine Länge G und reicht von dem Ende des profilierten Bereiches bis zum Kopfansatz. Erfindungsgemäß beträgt die Länge in Axialrichtung des Schaftes dieses Bereichs mit glatter Mantelfläche zwischen einem Drittel und Dreiviertel der Gesamtschaftlänge des Klebehakens. Der Klebehaken weist an der Schaftspitze 4 eine abgeschrägte ebene Fläche auf. Mit dieser Fläche wird einerseits die vor dem Klebehaken in das Bohrloch eingeführte Glaspatrone zertrümmert und anschließend werden die ineinanderfließenden zwei Komponenten des sich in der Glaspatrone befindenden Zwei-Komponenten-Klebers durch die durch Drehen des Hakens hervorgerufene Taumelbewegung der ebenen Fläche der Schaftspitze 4 vermengt. Das in Fig. 1 gezeigte Profil im Bereich 3 ist ein in den zylinderförmigen Schaft eingeschnittenes Gewinde 5. Das Einschneiden eines Gewindes in den vorzugsweise geschmiedeten bzw. gesenkgeschmiedeten Hakenrohling hat den Vorteil, daß mit Hilfe der Schraubengänge der sich am Boden des in den Fels geschlagenen Sackloches befindliche Zwei-Komponenten- Kleber durch Drehen des Hakens im Drehsinn der Schraubspirale nach außen auf den Kopf des Klebehakens zu gefördert werden kann. Das Fördern des Klebers auf den Ausgang des Sackloches zu erfolgt ferner durch Verdrängung durch den Hakenschaft. Der Zwei-Komponenten-Kleber wird somit an der Schaftmantelfläche entlang nach außen gedrückt und benetzt somit den gesamten Hakenschaft 1 bis zum Kopfende. Damit ist nach Erstarren des Klebers der Klebehaken wirkungsvoll gegen Feuchtigkeit und daraus resultierendem Rost geschützt. Der am Eingang des Sackloches herausquellene überschüssige Zwei-Komponenten-Kleber verschließt das Bohrloch hermetisch und bettet teilweise den Hakenkopf 2 in einen etwas überstehenden Klebersockel ein, so daß im Ansatzbereich des Kleberkopfes 2 am Schaft an der Felsoberfläche gelegene schmale Spalten und Fugen verhindert werden können, aus denen sich Feuchtigkeit nur langsam von allein verflüchtigt.

Das Schneiden eines Gewindes 5 in den geschmiedeten Schaft des Klebehakens erfordert nach dem Schmieden einen weiteren Arbeitsgang.

Demgegenüber kann es zweckmäßig sein, ein Profil gleich während des Schmiedens in den Bereich 3 anzubringen. Die Fig. 2 und 3 zeigen verschiedene Ausführungsformen, bei denen verschiedene Profile durch Schmieden angebracht worden sind. Fig. 2 zeigt, daß mit einem spitzen Schmiedewerkzeug ein regelmäßiges Muster von Vertiefungen in dem Schaftbereich 3 angebracht worden ist. Durch das Eindringen des Schmiedewerkzeugs in den Schaft entsteht gleichzeitig ein über die Mantelfläche des Schaftes vorstehender Noppen 6b. Auch hier können die Vertiefungen 6a bzw. Noppen auf einer Schraubenwendel angeordnet sein, so daß ein Drehen des Klebehakens um seine Schaftachse beim Einführen in das Bohrloch die Förderung des Klebers zum Ausgang des Bohrloches hin unterstützt. Die durch die Vertiefungen 6a und Noppen 6b bewirkte Oberflächenrauhigkeit im profilierten Bereich 3 gewährleistet wiederum eine ausreichende Belastbarkeit des Klebehakens in axialer Richtung. Für den glatten Bereich G zwischen dem Hakenkopf 2 und dem Beginn des profilierten Bereiches gilt das in Verbindung mit der Beschreibung des ersten Ausführungsbeispieles Gesagte ebenfalls.

Fig. 3 zeigt eine weitere Ausführungsform, bei der in den profilierten Bereich 3 des im wesentlichen zylinderförmigen Hakenschafttes 1 Rippen 7 geschmiedet oder gedreht worden sind.

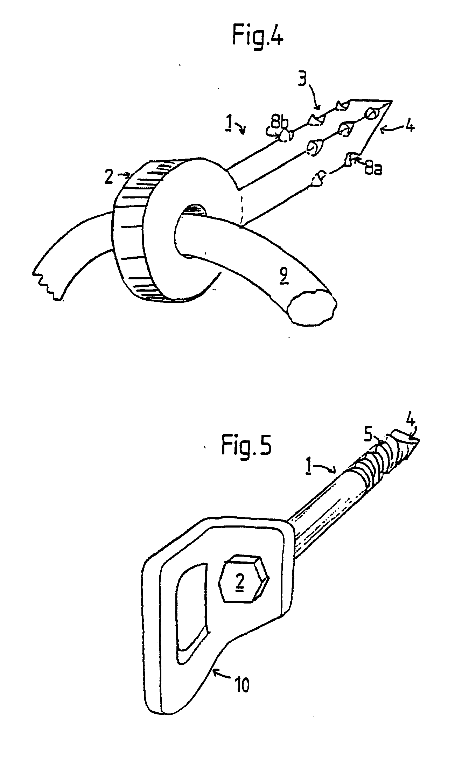

Fig. 4 zeigt einen Klebehaken mit einem rechteckigen Schaftquerschnitt. Generell kann der Schaft einen vieleckigen Querschnitt aufweisen. Im profilierten Bereich 3 des Hakenschaftes sind auf den zur Schaftachse koaxial verlaufenden Kanten des Schaftes gleichmäßig verteilte Kerben angebracht, die ebenfalls wie im Zusammenhang mit Fig. 2 beschrieben gleichzeitig Noppen 8b ausbilden können. Ein Klebehakenschaft mit vieleckigem Querschnitt kann dann von Vorteil sein, wenn zu erwarten ist, daß die immer geringer werdende Viskosität des eingeführten Zwei-Komponenten-Klebers eine größere Spaltbreite zwischen der Innenwand des Bohrloches und der Mantelfläche des Hakenschaftes erforderlich macht. Auch können durch den kreissegmentförmigen Querschnitt der Zwischenräume über jeder Schaftseitenfläche eventuell mit dem Kleber in Richtung Eingangsöffnung des Sackloches beförderte Glassplitter leichter transportiert werden.

Fig. 4 zeigt ferner einen in die Öse des Kopfes 2 eingeführten Metallring 9.

Die abgeschrägte Fläche 4 an der Spitze des Hakenschaftes kann auch eine beliebige andere Form aufweisen, sofern sie nur geeignet ist, ein Vermischen der zwei Komponenten des verwendeten Klebers durch Drehen des Hakens zu bewirken. So kann diese Fläche 4 beispielsweise die Form eines stumpf- oder spitzwinkligen Giebeldaches oder umgekehrt einer entsprechenden Kerbung haben.

Fig. 5 zeigt ein weiteres Ausführungsbeispiel des erfindungsgemäßen Klebehakens. Bei dieser Ausführungsform ist der Kopf 2 als Schraubenkopf ausgebildet, an dem eine Platte 10 in Winkelform angebracht ist. Auch bei diesem Ausführungsbeispiel wird der Hakenschaft 1 so tief wie möglich in das Bohrloch eingeführt, d.h. bis zum Anschlag der Platte 10 gegen den Fels. Der Schraubenkopf hat den Vorteil unter Zuhilfenahme eines entsprechenden Schlüssels mit höherem Drehmoment von Hand gedreht werden zu können. Dies ist dann von Vorteil, wenn große Kräfte notwendig sind, um den sich langsam verfestigenden Zwei-Komponenten-Kleber entlang der glatten Schaftoberfläche im Bereich G nach außen zu pressen.

Empirische Festigkeitsuntersuchungen haben ergeben, daß die Länge des Schaftbereiches mit glatter Manteloberfläche bis zu Dreiviertel der Gesamtlänge des Schaftes betragen kann. Eine bevorzugte Proportion zwischen den genannten Abmessungen liegt bei G ungefähr gleich 1/2 L. Von dieser bevorzugten Bemessung kann in Richtung auf die untere und obere Grenze für die Länge des Bereichs für G in Abhängigkeit von den Einsatzbedingungen in den durch den Anspruch 1 gegebenen Grenzen abgewichen werden. So wird bei Bohrlöchern, deren Sackende oberhalb der Eintrittsöffnung des Bohrlochs liegt, die Komponente der Belastung in Axialrichtung beispielsweise größer sein als dann, wenn der Boden des Sacklochs unterhalb der Eingangsöffnung der Bohrung liegt.

Um Klebehaken anzubringen, die von Generationen von Kletterern benutzt werden können, empfiehlt es sich, neben den Abdichtungsmaßnahmen ferner nichtrostende Stähle zu verwenden.

Schließlich kann die Form des Hakenschaftes in weiten Grenzen an bestimmte Erfordernisse angepaßt werden. So sind auch leicht kegelförmige Schaftformen denkbar.

Die vorliegende Erfindung vereinfacht das Setzen von Klebehaken am Berg erheblich dadurch, daß bei gleicher Belastbarkeit Borlöcher geringeren Durchmessers als bislang notwendig erforderlich sind.

## Ansprüche

1. Klebehaken, insbesondere zur Anbringung in Felsgestein oder dergleichen
mit einem Kopf (2) und einem sich daran anschließenden Schaft (1),
wobei der Schaft (1) einen Mantelflächenbereich (3) mit profilierter Oberflächenstruktur aufweist, dadurch gekennzeichnet, daß
der Schaft (1) mit einer Länge L an dem Kopfende in einem Bereich mit einer axialen Länge G eine glatte, von Oberflächenprofilen freie Oberfläche aufweist, mit
$1/3 \, L \leq G \leq 3/4 \, L$.

2. Klebehaken nach Anspruch 1, dadurch gekennzeichnet, daß die axiale Länge G des Bereichs mit glatter Schaftoberfläche vorzugsweise halb so groß wie die Schaftlänge L ist.

3. Klebehaken nach Anspruch 1 oder 2, dadurch gekennzeichnet, daß der Schaft (1) und der Kopf (2) aus gesenkgeschmiedetem und/oder nichtrostendem Stahl besteht.

4. Klebehaken nach Anspruch 1, 2 oder 3, dadurch gekennzeichnet, daß der Schaft (1) einen vieleckigen Querschnitt aufweist.

5. Klebehaken nach einem der Ansprüche 1-3, dadurch gekennzeichnet, daß der Schaft (1) im wesentlichen zylinderförmig ist.

6. Klebehaken nach einem der Ansprüche 1-3, dadurch gekennzeichnet, daß der Schaft (1) im wesentlichen eine konische Mantelfläche hat.

7. Klebehaken nach einem der vorstehenden Ansprüche, dadurch gekennzeichnet, daß das Oberflächenprofil ein Gewinde (5) ist.

8. Klebehaken nach einem der vorstehenden Ansprüche, dadurch gekennzeichnet, daß das zerklüftete Oberflächenprofil Rippen (7), Noppen (6b; 8b) und/oder in die Mantelfläche eingearbeitete Vertiefungen (6a; 8a) aufweist.

9. Klebehaken nach einem der vorstehenden Ansprüche, dadurch gekennzeichnet, daß die Noppen (6b; 8b) bzw. Vertiefungen (6a; 8a) auf einer Wendel angeordnet sind.

10. Klebehaken nach einem der Ansprüche 4, 8 und 9, dadurch gekennzeichnet, daß das zerklüftete Oberflächenprofil aus an den koaxialen Kanten des vieleckigen Schaftes eingearbeiteten Kerben (8a) bzw. Vorsprüngen (8b) besteht.

11. Klebehaken nach einem der vorstehenden Ansprüche, dadurch gekennzeichnet, daß das dem Kopfende gegenüberliegende Ende des Schafts eine plane, zur Schaftachse schräg orientierte Abschlußfläche bzw. - flächen (4) aufweist.

## Fig.1

## Fig.2

## Fig.3

# Fig.4

# Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 077 290 (H.O. MATTES)<br>* Seite 1, Zeile 36 - Seite 2, Zeile 35; Figuren 1,2 *<br>--- | 1-3,5,8 ,11 | A 63 B 29/02<br>F 16 B 13/14 |
| X | DE-C- 78 235 (J. BOEDDINGHAUS)<br>* Seite 1; Figuren 1-3 *<br>--- | 1,2,6,7 ,11 | |
| X | WO-A-8 807 141 (K. RACKETTE)<br>* Seite 3, Zeilen 6-29; Figuren 4-6 *<br>--- | 1-11 | |
| A | NOTE TECHNIQUE, Nr. 5, Mai 1955, Seite 15, Paris, FR<br>* Seite 15; Figuren *<br>--- | 8-10 | |
| A | FR-A-2 534 988 (F. PETZL)<br>--- | | |
| A | DE-B-1 225 529 (F. STICHT)<br>----- | | |

RECHERCHIERTE SACHGEBIETE (Int. Cl.5)

A 63 B
F 16 B
E 21 D

Der vorliegende Recherchenbericht wurde für alle Patentansprüche erstellt

| Recherchenort | Abschlußdatum der Recherche | Prüfer |
|---|---|---|
| DEN HAAG | 18-07-1989 | ARESO Y SALINAS J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes
    Dokument

EPO FORM 1503 03.82 (P0403)